# EUROPÄISCHE PATENTSCHRIFT

(11) **EP 0 474 128 B1**
(45) Veröffentlichungstag und Bekanntmachung des Hinweises auf die Patenterteilung: **11.01.1995**
(21) Anmeldenummer: 91114600.9
(22) Anmeldetag: 30.08.1991
(51) Int. Cl.: G01P 5/00

(54) **Verfahren zur Ermittlung eines Dopplersignals bei der Laser-Doppler-Anemometrie, sowie Laser-Doppler-Anemometer zur Durchführung dieses Verfahrens**
Method of determining a Doppler signal in Laser-Doppler-Anemometry, and a Laser-Doppler-Anemometer to realize this method
Procédé pour déterminer un signal Doppler dans un Anémomètre Laser Doppler et Anémomètre Laser Doppler pour la mise en oeuvre de ce procédé

(30) Priorität: 07.09.1990 DE 4028521
(43) Veröffentlichungstag der Anmeldung: 11.03.1992
(73) Patentinhaber: Deutsch-Französisches Forschungsinstitut Saint-Louis, 68300 Saint-Louis (FR); Physikalisch-Techn. Bundesanstalt, 38116 Braunschweig (DE)
(72) Erfinder: Dopheide, Dietrich, Dr., W-3300 Braunschweig (DE); Damp, Stephan, F-68300 Saint-Louis (FR)
(74) Vertreter: Schwabe, Hans-Georg, Dipl.-Ing.

(56) Entgegenhaltungen:
- EP-A- 0 009 533
- FR-A- 2 639 124
- OPTICS AND LASER TECHNOLOGY, Bd. 22, Nr. 3, Juni 1990, Haywards Heath, GB, Seiten 175-187; MacFadyen & Jennings: "Fibre-optic systems for dynamic light scattering - a review"
- TRANSACTIONS OF THE INSTITUTE OF ELECTRONICS AND COMMUNICATION, Bd. E.70, Nr. 2, Februar 1987, Tokyo, JP, Seiten 100-103; SHINOHARA ET AL: "Directional Laser Doppler Velocimetry Using Self-Mixing Effect of Semiconductor Laser Diode"

## Beschreibung

Die Erfindung betrifft ein Verfahren zur Ermittlung eines Dopplersignals bei einem Laser-Doppler-Anemometer gemäß dem Oberbegriff des Patentanspruchs 1, insbesondere zur Messung von Teilchengeschwindigkeiten, sowie ein Laser-Doppler-Anemometer gemäß dem Oberbegriff des Patentanspruchs 5, zur Durchführung dieses Verfahrens.

Ein gattungsgemäßes Verfahren, bzw. eine gattungsgemäße Vorrichtung gehen aus der EP-A-0 009 533 hervor.

In der älteren deutschen Patentanmeldung P 38 23 246.4 ist ein Laser-Doppler-Anemometer beschrieben, wie es insbesondere zur Messung von Teilchengeschwindigkeiten in einem strömenden Medium eingesetzt werden kann. Dieses Laser-Doppler-Anemometer umfaßt eine Laserquelle, eine Kolimatoroptik, eine Strahlteileroptik zur Erzeugung von wenigstens zwei Laser-Teilstrahlen und eine Fokussierungseinrichtung, um die wenigstens zwei Laser-Teilstrahlen in einem Meßvolumen zu fokussieren. Dieses ältere Anemometer umfaßt ferner eine Empfangsanordnung mit einem Detektor zum Auffangen des im Meßvolumen gestreuten Laserlichts, welches ausgewertet wird, um aus diesem reflektierten Laserlicht die Dopplerinformation zu gewinnen. Dieses bekannte Laser-Doppler-Anemometer kann bereits in einer besonders kompakten kleinen und preisgünstigen Ausführung hergestellt werden, da die Strahlumlenkelemente so angeordnet sind, daß die Laser-Teilstrahlen in der Ebene umgelenkt werden, die durch die Laser-Teilstrahlen selbst definiert ist.

Bei diesem bereits vorgeschlagenen Laser-Doppler-Anemometer muß jedoch zur Auswertung des im Meßvolumen gestreuten Laserlichts ein vergleichsweise breitbandiger Detektor verwendet werden, d.h. die Übertragungsfunktion des Detektors und damit auch der Empfängerschaltung beginnt im niederfrequenten Bereich bezüglich der Bandbreite und endet in einem relativ hohen Frequenzbereich, der beispielsweise bei 100 MHz liegt.

Auch bei weiteren herkömmlichen, das modulierte Streulicht nachweisenden Meßanordnungen, wie die bspw. aus dem Artikel von SHINOHARA ET AL: "Directional Laser Doppler Velocimetry Using....", The Transactions of the IEICE, Bd. E.70, Nr.2, Februar 1987, Seiten 100 bis 103, bekannt ist, die auch als nach dem optischen Dopplerprinzip arbeitende Geschwindigkeitsmesser (z.B. LDA) bezeichnet werden, gelangt ein breitbandiger Detektor im Basisband zur Anwendung, d.h. auch hier beginnt die Übertragungsfunktion des Detektors bzw. der Empfängerschaltung im niederfrequenten Bereich bezüglich der Bandbreite.

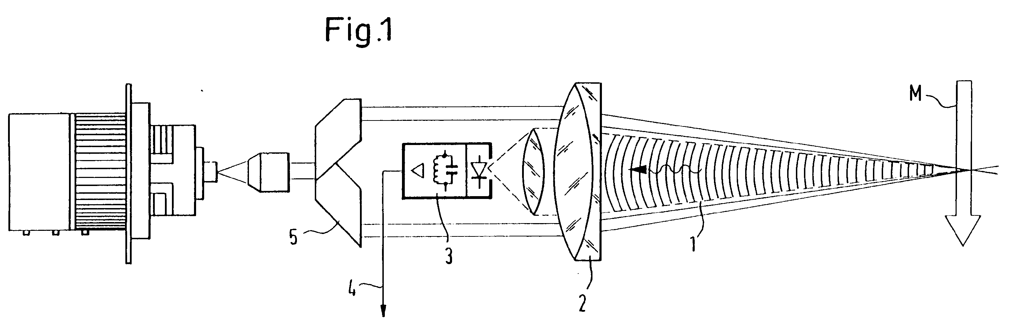

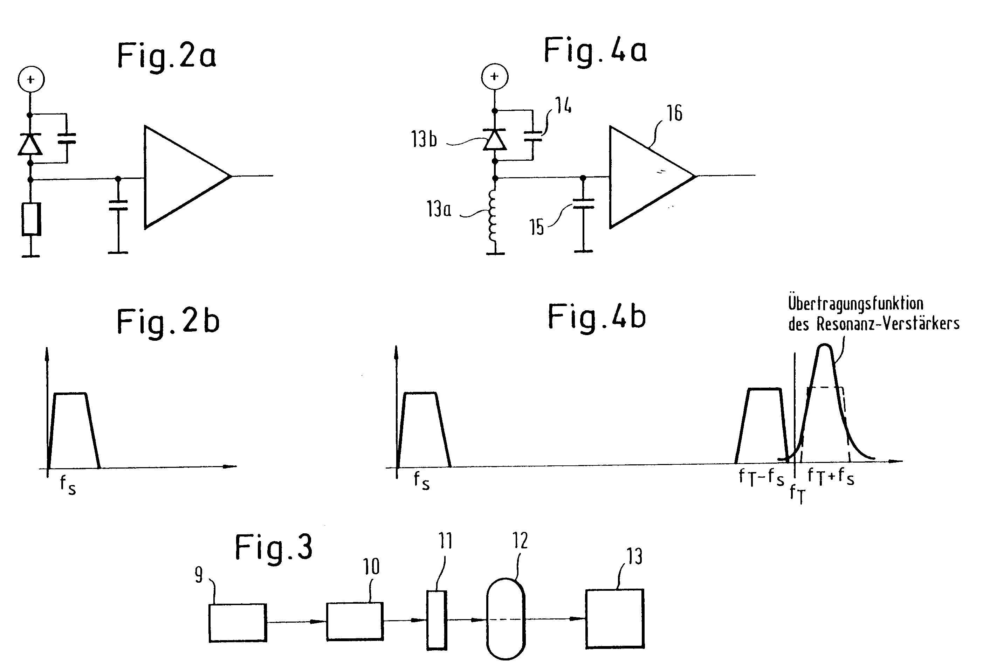

Fig. 1 zeigt die prinzipielle Anordnung eines Halbleiter-Laser-Doppler-Anemometers, während Fig. 2a den prinzipiellen typischen Aufbau einer Empfängerschaltung und Fig. 2b die dazugehörige Übertragungsfunktion zeigt.

Bei dieser bekannten Anordnung bzw. Aufbau der Empfängerschaltung stellen sich bei einem gewünschten Frequenzbereich von typischerweise 100 kHz bis 100 MHz einige technische Schwierigkeiten, insbesondere hinsichtlich der Auswahl rauscharmer Verstärker ein.

Zur Realisierung eines miniaturisierten Systemaufbaus wären insbesondere sog. PIN-Photo-Dioden vorteilhaft aufgrund ihres einfachen Betriebes (im Gegensatz zu den Avalanche-Photo-Dioden). Der Verwendung derartiger PIN-Photodioden steht jedoch die Tatsache im Wege, daß die parasitären Kapazitäten einschließlich der Detektorkapazität eine hohe Transimpedanz (entsprechend einem hohen Lastwiderstand in Fig. 2a) zur notwendigen Strom-Spannungswandlung bei großen Bandbreiten nicht zulassen.

Es kann zwar auch bei sehr niedrigen Signalfrequenzen das Problem des 1/f-Verstärkerrauschens umgangen werden, indem man auf herkömmliche Weise (vgl. die Literaturstelle "Journal of Lightwave Technology", Vol. 6, Nr. 4, April 1988, Seiten 582 bis 589) durch eine leichte Verschiebung der Wellenlängen der beiden Laserstrahlen gegeneinander ein sogenanntes frequenzverschobenes ("geshiftetes") LDA-System realisiert. Die hierzu erforderlichen Braggzellen sind aber schlecht in einem miniaturisierten (Halbleiter-Laser-)System zu integrieren.

Aus der oben Bezug genommenen EP-A-0 009 533 ist ein Laser-Sensor bekannt, mit dem die vor einem Luftfahrzeug auftretenden Luftströmungen in Flugrichtung und quer dazu gemessen werden sollen. Bei diesem Sensor wird ein Meßprinzip verwendet, das ein relativ breitbandiges Meßsignal erfordert. Demzufolge wird auch ein breitbandiger Detektor und ein damit verbundener breitbandiger Verstärker verwendet, der zu einer Vielzahl von Nachteilen führt. Zwar wird bei dem bekannten Sensor der breitbandige Meßstrahl einer höherfrequenten Modulation unterzogen, jedoch arbeitet der bekannte Sensor trotzdem mit einem breitbandigen Detektor sowie einem breitbandigen Verstärker, was eine Vielzahl von Nachteilen, beispielsweise das Problem des 1/f-Verstärkerrauschens, mit sich bringt.

Die der Erfindung zugrundeliegende Aufgabe besteht darin, ein Verfahren zur Ermittlung eines Dopplersignals bei einem Laser-Doppler-Anemometer sowie ein derartiges Laser-Doppler-Anemometer zur Durchführung des Verfahrens zu schaffen, welches einerseits eine kompakte gedrängte und insbesondere miniaturisierte Bauweise ermöglicht und andererseits den Einsatz einfach zu betreibender Bauelemente wie PIN-Photo-Dioden erlaubt.

Gemäß dem erfindungsgemäßen Verfahren wird diese Aufgabe durch die im Anspruch 1 aufgeführten Merkmale gelöst.

Erfindungsgemäß können insbesondere nunmehr für einen miniaturisierten Systemaufbau PIN-Photo-Dioden bevorzugt Anwendung finden und parasitäre Kapazitäten, die beispielsweise durch den Einsatz von PIN-Photo-Dioden eingeführt werden bzw. am Eingang eines Resonanzverstärkers auftreten, können selbst in das Resonanzverstärkerkonzept mit eingebunden werden, indem mit Hilfe einer Induktivität, ein Schwingkreis aufgebaut wird, der dann eine hohe, allerdings komplexe Transimpedanz ermöglicht. Da der so gebildete LC-Schwingkreis schmalbandig ist, bereitet die Auswahl rauscharmer Verstärker keinerlei Schwierigkeiten mehr. Bei dem oben genannten Basisband der Dopplerfrequenzen sind technische Spulen wegen ihrer notwendigen hohen Induktivitätswerte schlecht einsetzbar. Außerdem wäre die Filterbandbreite viel zu klein, um die Signalbandbreite vollständig zu erfassen. Beim Übergang in einen sehr viel höherfrequenten Bereich ändern sich diese Verhältnisse allerdings grundlegend. Bei Frequenzen etwa um 1 GHz (oder darüber) liegt die Spuleninduktivität im nH-Bereich (oder darunter), und zwar für einen Schwingkreis mit parasitären Kapazitäten im pF-Bereich. Diese Spulen sind daher mit sehr hoher Güte realisierbar und herstellbar und es kann bei einer solch hohen Resonanzfrequenz die Bandbreite, die gegeben ist durch die Schwingkreisgüte, die Signalbandbreite des Dopplersignals umfassen.

Die Transformation des Doppler-Signal-Frequenzbandes auf diese hohe Resonanzfrequenz erfolgt durch Modulation des Laserlichtes, was beispielsweise sehr einfach bei Laserdioden realisierbar ist, so daß das erfindungsgemäße Verfahren prädestiniert für Halbleiter-Laser-Doppler-Anemometer ist.

Erfindungsgemäß wird das trägerfrequenz-modulierte Licht ferner im LDA-Meßvolumen mit der Dopplerfrequenz amplitudenmoduliert, so daß dann ein Signalspektrum entsteht, welches ein positives und ein negatives Seitenband bzw. ein Signalspektrum oberhalb und unterhalb der Trägerfrequenz aufweist.

Zusätzlich zu dem Vorteil einer einfacheren und unter Umständen rauscharmeren Verstärkerwahl schlägt außerdem die Rauschfreiheit der imaginären (nicht mehr realen) Transimpedanz zu Buche. Es kann daher erfindungsgemäß auch ein sog. shot-noise-begrenzter Empfänger realisiert werden.

Schließlich kann das Verfahren nach der vorliegenden Erfindung umso vorteilhafter realisiert werden, je niedriger die Signalbandbreite ist bzw. desto höher die Güte des Resonanzkreises gewählt werden kann. Es kann daher auch insbesondere bei sehr niedrigen Signalfrequenzen das Problem des 1/f-Verstärkerrauschens umgangen werden.

Besonders vorteilhafte Ausgestaltungen und Weiterbildung des erfindungsgemäßen Verfahrens ergeben sich aus den Ansprüchen 2 bis 4.

Ein Trägerfrequenz-Laser-Doppler-Anemometer zur Durchführung des erfindungsgemäßen Verfahrens umfaßt neben üblichen Merkmalen eine Modulatorschaltung, um einem Meßlaser eine Trägerfrequenz aufzumodulieren, die wesentlich hochfrequenter als die Doppler-Frequenz ist, ferner einen Resonanzverstärker, der das mit dem Dopplersignal amplitudenmodulierte Licht empfängt und das in bezug auf das Trägersignal positive oder negative Seitenband verstärkt und schließlich eine Auswerteschaltung, welche das positive oder negative Seitenband weiterverarbeitet, um daraus die Dopplerinformation zu gewinnen.

Gemäß einer vorteilhaften Ausführungsform können zwei Resonanzverstärker vorgesehen sein, von denen der eine auf das negative Seitenband und der andere auf das positive Seitenband abgestimmt ist, wobei die Auswerteschaltung so aufgebaut ist, daß sie das negative und das positive Seitenband verarbeiten kann. Bei dieser letzteren Ausführungsform können die zwei Seitenbänder so weiter verarbeitet werden, daß das Signal-zu-Rausch-Verhältnis vergrößert wird.

Gemäß einer alternativen Ausführungsform kann der Resonanzverstärker auch dafür ausgebildet sein, um das hochfrequente verstärkte Signal über die Trägerfrequenz wieder in das Basisband zur Weiterverarbeitung zu mischen.

Der Resonanzverstärker kann sowohl als Serien-Resonanzkreis als auch als Parallel-Resonanzkreis ausgebildet sein.

Besonders vorteilhafte Ausgestaltungen des erfindungsgemässen Trägerfrequenz-Laser-Doppler-Anemometers ergeben sich aus den Ansprüchen 10 bis 14.

Im folgenden wird die Erfindung anhand von Ausführungsbeispielen unter Hinweis auf die Zeichnung näher erläutert. Es zeigen:
- Fig. 1: den schematischen Aufbau eines herkömmlichen Laser-Doppler-Anemometers, der als zusätzliche Einrichtung einen Resonanzverstärker mit Merkmalen nach der Erfindung enthalten kann;
- Fig. 2a: schematisch den Aufbau des Eingangs bzw. der Verstärkerstufe eines herkömmlichen Laser-Doppler-Anemometers;
- Fig. 2b: die Übertragungsfunktion des Detektors bzw. der Empfängerschaltung der Fig. 2a;
- Fig. 3: schematisch den Systemaufbau eines Trägerfrequenz-Laser-Doppler-Anemometers mit Merkmalen nach der Erfindung;
- Fig. 4a: ein Ausführungsbeispiel eines Resonanzverstärkers mit Merkmalen nach der Erfindung; und
- Fig. 4b: die Übertragungsfunktion des Resonanzverstärkers nach Fig. 4a.

Fig. 1 zeigt schematisch den Aufbau eines herkömmlichen Laser-Doppler-Anemometers, bei dem ein Resonanzverstärker mit Merkmalen nach der Erfindung zusätzlich eingebaut werden kann.

Bei der gezeigten Anordnung werden die mit Hilfe von Strahlumlenkelementen 5 erzeugten Laser-Teilstrahlen in ein Medium, beispielsweise ein strömendes Medium mit darin enthaltenen Teilchen eingestrahlt, wobei das Meßvolumen allgemein mit M bezeichnet ist. Bei dem gezeigten Ausführungsbeispiel wird ein Teil der Rückstrahlung 1, welche mit der Dopplerfrequenz amplitudenmoduliert ist, über eine Optik 2 geleitet und auf ein lichtempfindliches Element einer Empfängerschaltung fokussiert.

Die Empfängerschaltung ist allgemein mit 3 bezeichnet und kann Merkmale nach der vorliegenden Erfindung aufweisen.

Das hochfrequente verstärkte Signal wird dann bei 4 abgegriffen und in einer Auswerteschaltung ausgewertet.

Ein Ausführungsbeispiel eines Trägerfrequenz-Laser-Doppler-Anemometers zur Durchführung des erfindungsgemäßen Verfahrens ist in Fig. 3 schematisch veranschaulicht. Gemäß Fig. 3 gelangt Laserlicht einer Laserlichtquelle 9 zu einer Modulatorschaltung 10, in welcher das Laserlicht mit einer hochfrequenten Trägerfrequenz, die sehr viel größer als die Doppler-Frequenz ist, moduliert wird. Das den Modulator 10 verlassende modulierte Laserlicht wird dann über ein optisches System geleitet, welches allgemein mit 11 bezeichnet ist und auf sehr verschiedene Weise aufgebaut sein kann, also beispielsweise auch den Aufbau haben kann, wie er in der oben genannten deutschen Patentanmeldung P 38 23 246.4 beschrieben ist. Das so vorbereitete Laser-Meßlicht wird dann in ein Laser-Doppler-Anemometer-Meßvolumen 12 eingestrahlt und durchdringt dieses, so daß das vom Meßvolumen gestreute Licht, das mit der Dopplerfrequenz amplitudenmoduliert ist, zu dem Eingang eines Resonanzverstärkers 13 gelangt, in welchem diese Signale verstärkt werden. Der Resonanzverstärker kann so aufgebaut sein, wie dies in Fig. 4a schematisch dargestellt ist. Der Eingang des Resonanzverstärkers umfaßt eine Induktivität 13a sowie eine damit in Reihe geschaltete Photodiode, wie beispielsweise eine PIN-Photo-Diode, welche eine bestimmte Eigenkapazität 14 aufweist. Der Eingangskreis des Resonanzverstärkers ist ferner noch mit einer parasitären Kapazität 15 behaftet. Abhängig von der gewählten Resonanzfrequenz kann die Kapazität 15 jedoch auch noch als zusätzliche Kapazität vorgesehen sein. Die Resonanzfrequenz des gezeigten Resonanzverstärkers liegt in einem Bereich von ca. 1 GHz oder auch darüber. Die Induktivität 13a liegt dabei im nH-Bereich oder darunter, während die parasitäre Kapazität im pF-Bereich liegt. Die Induktivität 13a kann in bevorzugter Weise in Form einer Spule ausgeführt werden, wobei bei dieser vergleichsweise geringen Spuleninduktivität eine hohe Güte ohne weiteres realisiert werden kann. Es kann daher bei einer solch hohen Resonanzfrequenz die Bandbreite, welche gegeben ist durch die Schwingkreisgüte, so gewählt werden, daß sie die Signalbandbreite des Dopplersignals umfaßt.

Erfindungsgemäß wird das verstärkte hochfrequente Signal in einer nachgeschalteten, in Fig. 3 nicht näher bezeichneten Auswerteschaltung weiter verarbeitet. Diese Auswerteschaltung kann auf sehr verschiedene Weise ausgeführt werden, beispielsweise so, daß das verstärkte hochfrequente Signal über die Trägerfrequenz wieder in das Basisband zur Weiterverarbeitung gemischt wird. Die Auswerteschaltung kann aber auch so ausgelegt sein, daß sie für die Weiterverarbeitung zweier Seitenbänder geeignet ist, um dadurch eine genauere und insbesondere auch störungsfreiere Gewinnung des Dopplersignals zu erreichen. Dieses kann bspw. dadurch erfolgen, daß das negative Seitenband durch Frequenzmultiplikation in das positive Seitenband oder umgekehrt umgesetzt wird. Die positiven oder negativen Seitenbänder, die so erhalten werden können, werden weiter verarbeitet, um aus ihnen ein Dopplersignal abzuleiten.

Für den Fachmann sind eine Reihe von Abwandlungen und Änderungen der gezeigten Ausführungsbeispiele ohne weiteres erkennbar, ohne jedoch dadurch den Rahmen der vorliegenden Erfindung zu verlassen. Es besteht beispielsweise die Möglichkeit, das optische System 11 so auszubilden, daß mehrere Laser-Teilstrahlen erzeugt werden, die entweder zueinander parallel oder so in das Meßvolumen 12 eingeleitet werden, daß sie sich innerhalb des Meßvolumens schneiden.

Ferner kann nicht nur ein Detektor, sondern es können mehrere Detektoren und damit auch mehrere Resonanzverstärker vorgesehen sein, um etwa im Sinne der deutschen Patentanmeldung P 38 39 537.1 auch gleichzeitig eine Wellenlängen- und Leistungsmessung durchführen zu können. Auch können die verwendeten Strahlungsdetektoreinrichtungen einen voneinander verschiedenen spektralen Empfindlichkeitskennlinienverlauf hinsichtlich der gleichen zu messenden Strahlung aufweisen, um dadurch beispielsweise ein leistungsabhängiges und ein wellenlängenabhängiges elektrisches Signal zu erzeugen.

Das Verfahren nach der vorliegenden Erfindung kann auch bevorzugt zur Messung der Bewegungsgeschwindigkeit von insbesondere lichtdurchlässigen Teilchen, wie beispielsweise Gasblasen eingesetzt werden, die in einer Flüssigkeit vorhanden sind. Das Laserlicht kann dabei mit einem Signal trägerfrequenzmoduliert werden, dessen Frequenz oberhalb der Resonanzfrequenz der festzustellenden Gasblasen liegt. Das so trägerfrequenzmodulierte Laserlicht wird von einer Sendeeinrichtung in die Flüssigkeit, in der die Gasblasen vorhanden sind, eingeleitet und mit Hilfe einer Empfangseinrichtung wird das durch das Vorhandensein der Gasblasen gestreute Signal aufgefangen. Dieses Empfangssignal enthält symmetrische Modulationsseitenbänder und auch ein asymmetrisches Seitenband, welches ein Dopplerfrequenzsignal enthält, das durch die Streuung des gesendeten Signals eingeführt wird. Dieses Empfangssignal wird dann - gegebenenfalls nach einer geeigneten Verstärkung desselben - so verarbeitet, daß die symmetrischen Modulationsseitenbänder und die nicht vorübergehenden asymmetrischen Seitenbänder beseitigt werden, jedoch die vorübergehenden asymmetrischen Seitenbänder angenommen und verarbeitet werden. Dieses letztere Verfahren bietet die Möglichkeit, daß das Dopplersignal mit sehr hoher Genauigkeit gewonnen werden kann. Die lichtdurchlässigen Teilchen, deren Geschwindigkeit dabei ermittelt werden soll, können beispielsweise Bestandteil eines strömenden Mediums sein, wie beispielsweise einer Flüssigkeit.

## Patentansprüche

1. Verfahren zur Ermittlung eines Dopplersignals bei einem Laser-Doppler-Anemometer, insbesondere zur Messung von Teilchengeschwindigkeiten, wobei eine Einrichtung einen Meß-Laserlichtstrahl abstrahlt, der geteilt und sich überschneidend in ein Meßvolumen gelenkt wird, und eine innerhalb des Meßvolumens auftretende Streu- und/oder Reflexionsstrahlung durch ein lichtempfindliches Element einer Empfängerschaltung aufgenommen wird, wobei das Meß-Laserlicht mit einer hochfrequenten Trägerfrequenz, die wesentlich größer als die Doppler-Frequenz ist, moduliert wird, und das trägerfrequenzmodulierte Laserlicht in dem Meßvolumen mit der Dopplerfrequenz amplitudenmoduliert wird, so daß ein Signalspektrum mit mehreren Seitenbändern entsteht, **gekennzeichnet** durch die folgenden Schritte:
a) in einem Resonanzverstärker wird das in bezug auf die Trägerfrequenz positive und/oder negative Seitenband verstärkt, und
b) das positive und/oder negative Seitenband wird zur Gewinnung der Dopplerinformation weiter verarbeitet.

2. Verfahren nach Anspruch 1, dadurch **gekennzeichnet,** daß das positive und/oder negative Seitenband zu einer Weiterverarbeitung über die Trägerfrequenz in das Basisband gemischt wird.

3. Verfahren nach Anspruch 1, dadurch **gekennzeichnet**, daß das negative Seitenband durch Frequenzmultiplikation in das positive Seitenband oder umgekehrt umgesetzt wird und daß die so erhaltenen positiven oder negativen Seitenbänder weiter verarbeitet werden, um aus ihnen ein Dopplersignal abzuleiten.

4. Verfahren nach einem der Ansprüche 1 bis 3, zur Messung der Geschwindigkeit von lichtdurchlässigen Teilchen in einem strömenden Medium, dadurch **gekennzeichnet**, daß das Laserlicht derart trägerfrequenzmoduliert wird, daß das das Meßvolumen verlassende Laserlicht symmetrische Modulations-Seitenbänder und ein asymmetrisches Seitenband enthält, welches ein Dopplerfrequenzsignal aufweist, und daß das das Meßvolumen verlassende Laserlicht so verarbeitet wird, daß die symmetrischen Seitenbänder und die nicht vorübergehenden asymmetrischen Seitenbänder beseitigt werden, jedoch die vorübergehenden asymmetrischen Seitenbänder angenommen und weiter verarbeitet werden.

5. Trägerfrequenz-Laser-Doppler-Anemometer, zur Durchführung des Verfahrens nach einem der Ansprüche 1 bis 4, mit einer Einrichtung, die Laserlicht abgeben kann, mit Strahlumlenkelementen sowie einem Strahlteiler, mit einer Einrichtung zum Fokussieren einer in einem Meßvolumen gestreuten bzw. reflektierten Strahlung auf einem lichtempfindlichen Element einer Empfängerschaltung, wobei eine Modulatorschaltung (10) vorgesehen ist, um einem Meß-Laser eine hochfrequente Trägerfrequenz, die wesentlich größer als die Doppler-Frequenz ist, aufzumodulieren, **gekennzeichnet** durch
a) einen Resonanzverstärker (13), der das mit dem Dopplersignal amplitudenmodulierte Licht empfängt und das in bezug auf das Trägersignal positive oder negative Seitenband verstärkt, und
b) eine Auswerteschaltung, welche das positive oder negative Seitenband weiter verarbeitet, um daraus die Dopplerinformation zu gewinnen.

6. Anemometer nach Anspruch 5, dadurch **gekennzeichnet,** daß zwei Resonanzverstärker vorgesehen sind, von denen der eine auf das negative Seitenband und der andere auf das positive Seitenband abgestimmt ist und daß die Auswerteschaltung so aufgebaut ist, daß sie das negative und das positive Seitenband verarbeiten kann.

7. Anemometer nach Anspruch 5, dadurch **gekennzeichnet**, daß der Resonanzverstärker dafür ausgebildet ist, um das hochfrequente verstärkte Signal über die Trägerfrequenz wieder in das Basisband zur Weiterverarbeitung zu mischen.

8. Anemometer nach einem der Ansprüche 5 bis 7, dadurch **gekennzeichnet**, daß der Resonanzverstärker als Serien-Resonanzkreis ausgebildet ist.

9. Anemometer nach einem der Ansprüche 5 bis 7, dadurch **gekennzeichnet,** daß der Resonanzverstärker als Parallel-Resonanzkreis ausgebildet ist.

10. Anemometer nach Anspruch 5, dadurch **gekennzeichnet**, daß die Modulatorschaltung (10) als Modulationselement eine Laserdiode aufweist, um das Dopplersignal-Frequenzband durch Modulation an eine hohe Trägerfrequenz zu transformieren.

11. Anemometer nach einem der Ansprüche 5 bis 10, dadurch **gekennzeichnet** daß die hohe Trägerfrequenz im Bereich von z.B. einem GHz oder höher liegt und der Resonanzfrequenz des bzw. der Resonanzverstärker entspricht.

12. Anemometer nach einem der Ansprüche 5 bis 11, dadurch **gekennzeichnet**, daß der Resonanzkreis des bzw. der Resonanzverstärker wenigstens eine PIN-Photo-Diode enthält.

13. Anemometer nach einem der Ansprüche 5 bis 12, dadurch **gekennzeichnet**, daß der aktive Verstärker (16) der Resonanzverstärkerschaltung einen shotnoise-begrenzten Empfänger ermöglicht.

## Claims

1. Method of determining a Doppler signal in a laser Doppler anemometer, in particular for measuring particle velocities, in which a means emits a measuring laser light beam which is divided and is directed in an intersecting manner into a measuring volume, and scattered and/or reflective radiation occurring within the measuring volume is absorbed by a light-sensitive element of a receiver circuit, the measuring laser light being modulated with a high-frequency carrier frequency which is substantially higher than the Doppler frequency, and the carrier frequency-modulated laser light being amplitude-modulated with the Doppler frequency in the measuring volume so as to produce a signal spectrum with several sidebands, characterised by the following steps:
a) the sideband which is positive and/or negative relative to the carrier frequency is amplified in a resonance amplifier, and
b) the positive and/or negative sideband is further processed in order to obtain the Doppler information.

2. Method according to claim 1, characterised in that the positive and/or negative sideband is mixed with the baseband via the carrier frequency for further processing.

3. Method according to claim 1, characterised in that the negative sideband is converted into the positive sideband or vice versa by frequency multiplication and that the resulting positive or negative sidebands are further processed in order to derive a Doppler signal therefrom.

4. Method according to one of claims 1 to 3, for measuring the velocity of optically transparent particles in a flowing medium, characterised in that the laser light is carrier frequency-modulated in such a manner that the laser light leaving the measuring volume contains symmetrical modulation sidebands and an asymmetrical sideband having a Doppler frequency signal, and that the laser light leaving the measuring volume is processed in such a manner that the symmetrical sidebands and the non-transient aysmmetrical sidebands are eliminated, but the transient asymmetrical sidebands are accepted and further processed.

5. Carrier-frequency laser Doppler anemometer for carrying out the method according to one of claims 1 to 4, comprising a means which can emit laser light, beam-deflecting elements and a beam splitter, and a means for focusing radiation scattered or reflected in a measuring volume on a light-sensitive element of a receiver circuit, a modulator circuit (10) being provided in order to modulate a high-frequency carrier frequency which is substantially higher than the Doppler frequency upon a measuring laser, characterised by
a) a resonance amplifier (13) which receives the light amplitude-modulated with the Doppler signal and amplifies the sideband which is positive or negative relative to the carrier signal, and
b) an evaluation circuit which further processes the positive or negative sideband in order to obtain the Doppler information therefrom.

6. Anemometer according to claim 5, characterised in that two resonance amplifiers are provided, one being tuned to the negative sideband and the other to the positive sideband, and that the evaluation circuit is constructed in such a manner that it can process the negative and the positive sideband.

7. Anemometer according to claim 5, characterised in that the resonance amplifier is designed to mix the high-frequency amplified signal with the baseband once again via the carrier frequency for further processing.

8. Anemometer according to one of claims 5 to 7, characterised in that the resonance amplifier is a series-resonant circuit.

9. Anemometer according to one of claims 5 to 7, characterised in that the resonance amplifier is a parallel-resonant circuit.

10. Anemometer according to claim 5, characterised in that the modulator circuit (10) has a laser diode as a modulation element in order to transform the Doppler signal frequency band into a high carrier frequency by modulation.

11. Anemometer according to one of claims 5 to 10, characterised in that the high carrier frequency is situated in the range of, e.g. 1 GHz or more and corresponds to the resonant frequency of the resonance amplifier or amplifiers.

12. Anemometer according to one of claims 5 to 11, characterised in that the resonant circuit of the resonance amplifier or amplifiers contains at least one PIN photodiode.

13. Anemometer according to one of claims 5 to 12, characterised in that the active amplifier (16) of the resonance amplifier circuit allows for a shot noise-limited receiver.

## Revendications

1. Procédé pour obtenir un signal Doppler sur un anémomètre à laser à effet Doppler, en particulier pour mesurer la vitesse de particules, procédé selon lequel un dispositif diffuse un faisceau de lumière laser de mesure qui est séparé et dirigé en se croisant dans un volume de mesure, et selon lequel un rayonnement diffusé et/ou réfléchi apparaissant à l'intérieur du volume de mesure est capté par un élément sensible à la lumière d'un circuit de réception, la lumière laser de mesure étant modulée par une fréquence porteuse à haute fréquence nettement plus élevée que la fréquence Doppler, et selon lequel la lumière laser dont la fréquence porteuse a été modulée est modulée en amplitude dans le volume de mesure avec la fréquence Doppler, de manière à produire un spectre de signal à plusieurs bandes latérales, procédé caractérisé par les phases suivantes:
a) on amplifie dans un amplificateur à circuits accordés la bande latérale positive et/ou négative selon la fréquence porteuse, et
b) on continue à traiter la bande latérale positive et/ou négative pour obtenir l'information Doppler.

2. Procédé selon la revendication 1, caractérisé en ce qu'on mélange la bande latérale positive et/ou négative pour continuer son traitement par l'intermédiaire de la fréquence porteuse dans la bande de base.

3. Procédé selon la revendication 1, caractérisé en ce qu'on transpose la bande latérale négative par multiplication de fréquence dans la bande latérale positive ou vice-versa et qu'on continue à traiter les bandes latérales positives ou négatives ainsi obtenues pour en dériver un signal Doppler.

4. Procédé selon l'une quelconque des revendications 1 à 3 pour mesurer la vitesse de particules translucides dans un milieu conducteur, caractérisé en ce qu'on module la lumière laser par une fréquence porteuse, de manière à ce que la lumière laser quittant le volume de mesure comporte des bandes latérales de modulation symétriques et une bande latérale asymétrique, laquelle présente un signal de fréquence Doppler, et qu'on traite la lumière laser quittant le volume de mesure de manière à supprimer les bandes latérales symétriques et les bandes latérales asymétriques non transitoires, mais à accepter les bandes latérales asymétriques transitoires que l'on continue à traiter.

5. Anémomètre à laser à effet Doppler à fréquence porteuse pour la mise en oeuvre du procédé selon l'une quelconque des revendications 1 à 4, comportant un dispositif susceptible de fournir une lumière laser, des éléments de commutation de faisceau et un séparateur de faisceau, et un dispositif permettant la focalisation d'un rayonnement diffusé ou réfléchi dans un volume de mesure sur un élément sensible à la lumière d'un circuit de réception, un circuit modulateur (10) étant prévu pour moduler faisceau un laser de mesure à une fréquence porteuse à haute fréquence nettement plus élevée que la fréquence Doppler, caractérisé par
a) un amplificateur à circuits accordés (13), qui réceptionne la lumière modulée en amplitude par le signal Doppler et amplifie la bande latérale positive ou négative selon le signal porteur, et
b) un circuit d'exploitation, qui continue à traiter la bande latérale positive ou négative pour en obtenir l'information Doppler.

6. Anémomètre selon la revendication 5, caractérisé en ce que deux amplificateurs à circuits accordés sont prévus dont l'un est réglé sur la bande latérale négative et l'autre sur la bande latérale positive, et en ce que le montage du circuit d'exploitation est tel que le traitement des bandes positive et négative soit possible.

7. Anémomètre selon la revendication 5, caractérisé en ce que l'amplificateur à circuits accordés est conçu pour mélanger de nouveau le signal amplifié à haute fréquence, par l'intermédiaire de la fréquence porteuse, dans la bande de base afin de continuer le traitement.

8. Anémomètre selon l'une quelconque des revendications 5 à 7, caractérisé en ce que l'amplificateur à circuits accordés est conçu comme circuit résonnant en série.

9. Anémomètre selon l'une quelconque des revendications 5 à 7, caractérisé en ce que l'amplificateur à circuits accordés est conçu comme circuit résonnant en parallèle.

10. Anémomètre selon la revendication 5, caractérisé en ce que le circuit modulateur (10) comporte comme élément de modulation une diode laser permettant de transformer la bande de fréquence à signal Doppler par modulation en une fréquence porteuse élevée.

11. Anémomètre selon l'une quelconque des revendications 5 à 10, caractérisé en ce que la fréquence porteuse élevée se situe par exemple dans la zone d'un Ghz ou plus et correspond à la fréquence de résonance du ou des amplificateur(s) à circuits accordés.

12. Anémomètre selon l'une quelconque des revendications 5 à 11, caractérisé en ce que le circuit résonnant du ou des amplificateur(s) à circuits accordés comporte au moins une photodiode PIN.

13. Anémomètre selon l'une quelconque des revendications 5 à 12, caractérisé en ce que l'amplificateur actif (16) du circuit d'amplificateurs à circuits accordés permet un récepteur limité en bruit de grenaille.
